# EUROPEAN PATENT APPLICATION

(11) **EP 1 944 515 A1**
(43) Date of publication of application: **16.07.2008**
(21) Application number: 05847857.9
(22) Date of filing: 31.12.2005
(51) Int. Cl.: F16B 7/04, F16B 9/02, F16B 12/54, E05B 65/00

(54) **A CONNECTING LOCK FOR AN EXHIBIT FRAMEWORK ASSEMBLY**

(30) Priority: 14.10.2005 CN 200510094852
(71) Applicant: Changzhou Lingtong Exhibition Products Co., Ltd, Changzhou, Jiangsu 213102 (CN)
(72) Inventor: LIU, Lianping, Changzhou, Jiangsu 213102 (CN); CHENG, Daoguang, Changzhou, Jiangsu 213102 (CN)
(74) Representative: Bongen, Renaud & Partner
(86) International application number: PCT/CN2005/002421
(87) International publication number: WO 2007/041905

(57) **Abstract**

The present invention discloses a connecting lock for exhibit framework assembly which connects the parts of the exhibit apparatus, consisting of a lock shell, a locking plate and an eccentric wheel, wherein the eccentric wheel is composed of a wheel axle, an eccentric disc and a wheel cap, the eccentric disc is mounted on the wheel axle and provided with the wheel cap, the locking plate is provided in the lock shell, two alculas are provided at the head of the locking plate, holes of the eccentric disc matching the eccentric disc are made at the rear of the locking plate, the alcula protrude out of the closed shell, a wheel axle hole is mounted at the rear of the closed shell, a groove for mounting the eccentric wheel is mounted on the wall of the closed shell, and an open window for mounting and dismantling the built-in assembly is provided at the rear of the closed shell. The utility model has the advantages of increased strength and reliability, simplified die, improved yield of products and increased strength of the boss.

## Description

### Field of the Invention

The present invention relates to a connecting lock for exhibit apparatus, particularly to a high-strength connecting lock for exhibit framework assembly.

### Background of the Invention

To get the required shape, realize fine lock, prevent the downward movement of the eccentric wheel and collapsed eccentricity, a plurality of windows and bosses are arranged at the rear in the prior lock shell, for instance, to provide holes to dodge of the bent portion of the reed end, to provide side holes to dodge of the eccentric cam and provide certain protection against collapsed eccentricity, to provide bosses to avoid the downward movement of the reed and collapsed eccentricity, and to provide two technology holes as needed for the technology. As a plurality of holes are made in the lock shell, the strength of the lock shell is greatly reduced, which leads to the cracking of the lock shell when the locking torque is too large and reduces the effectiveness in preventing the collapsed eccentricity, hence the defect of low reliability exists in the prior lock shell.

### Summary of the Invention

The present invention provides a connecting lock for exhibit framework assembly with high reliability and allowing the manufacturing process to be simplified.

### The following technical proposal is used in the present invention:

A connecting lock for exhibit framework assembly which connects the parts of the exhibit apparatus, comprising: a lock shell, a locking plate provided in the lock shell, at least two alculas provided at a head of the locking plate and an eccentric wheel, the eccentric wheel comprises a wheel axle, an eccentric disc mounted on the wheel axle, and a wheel cap, the eccentric disc is provided with the wheel cap, mating hole of the eccentric disc matching the eccentric disc are made at the rear of the locking plate, wherein that the lock shell is a closed shell with cavity where a alcula window is provided at the front end, the aculas protrude out of the closed shell via the alcula window from inside the closed shell, a wheel axle hole running-fit the wheel axle is mounted at the rear of the closed shell, a groove for mounting the eccentric wheel is mounted on the wall of the closed shell opposite to the wheel axle hole, and an open window for mounting and disassembly the built-in assembly is provided at the rear of the closed shell for disassembly and installing the locking plate and the eccentric wheel.

Also, for the connecting lock for exhibit framework assembly in the present invention, a boss can be provided in the internal wall area of the closed shell between the front of the closed shell and the center line of the wheel axle hole perpendicular to the moving direction of the locking plate, and extends to form a reinforcing block; the reinforcing block extends in the tangent direction of the wheel axle hole; the rear of the locking plate includes downward bend shape; the rear end of the locking plate is a bevel; a long hole for the access by the rear of the locking plate is provided on the wall of the closed shell below the rear of the locking plate when the connecting lock for exhibit framework assembly is unlocked; the locking plate platen is arranged between the eccentric disc and the wheel cap; and a reed is provided on the locking plate.

Compared with the prior art, the present invention has the following advantages:
(1) The present invention has removed the boss at the rear in the prior art, and provided an "open type" window for mounting and disassembly the built-in assembly to avoid the necessity for setting a plurality of technology holes in the lock shell. The shell in the present invention becomes a relatively closed "closed type" shell with only a few functional holes and removal holes, and the reduction of holes in the shell improves the strength, thereby increasing the reliability of the present invention. In the present invention, for the manufacture of the construction, knockout cores are provided only at the two ends, thus reducing the number of knockout cores, simplifying the die and increasing the qualified rate of the products.
(2) The reinforcing block, particularly the reinforcing block formed from the extension in the tangent direction of the wheel axle hole, improves the bearing condition of the boss, eliminates the defect that the corner of the boss is sensitive to damage under stress in the prior art, increases the strength of the boss and further improves the reliability of the present invention.
(3) While butting against the locking plate so that the eccentric disc is located in the mating hole of the eccentric disc of the locking plate, providing a proper match, the locking plate platen with a diameter larger than that of the wheel cap is pressed by the inner wall of the closed shell (the inner walls of the closed shell on the two sides of the groove for mounting the eccentric wheel) so that the locking plate can only move in the shell for effective locking and unlocking, and the reliability of the locking state of the connecting lock is maintained.

### Brief Description of the Drawings

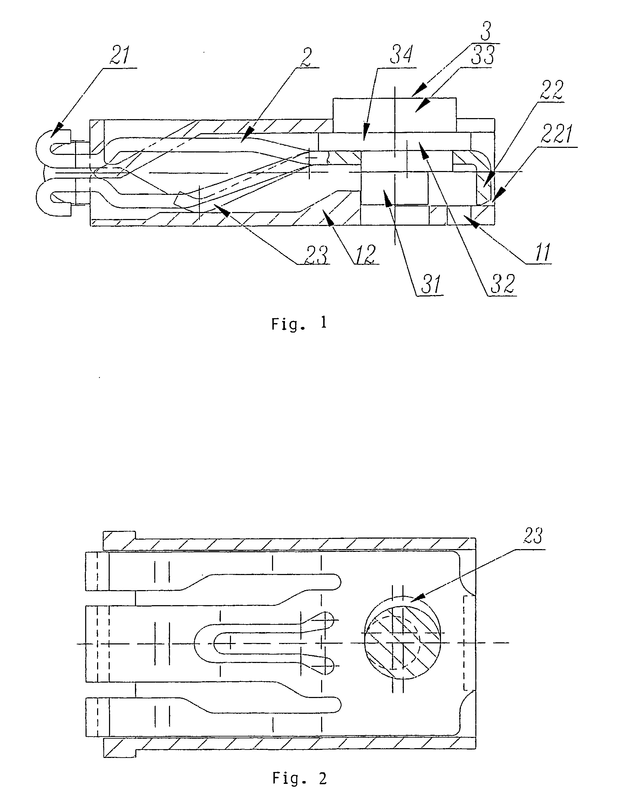

Fig. 1 shows the main view of the construction of the present invention.
Fig. 2 shows the top view of the construction (complete section) of the present invention.

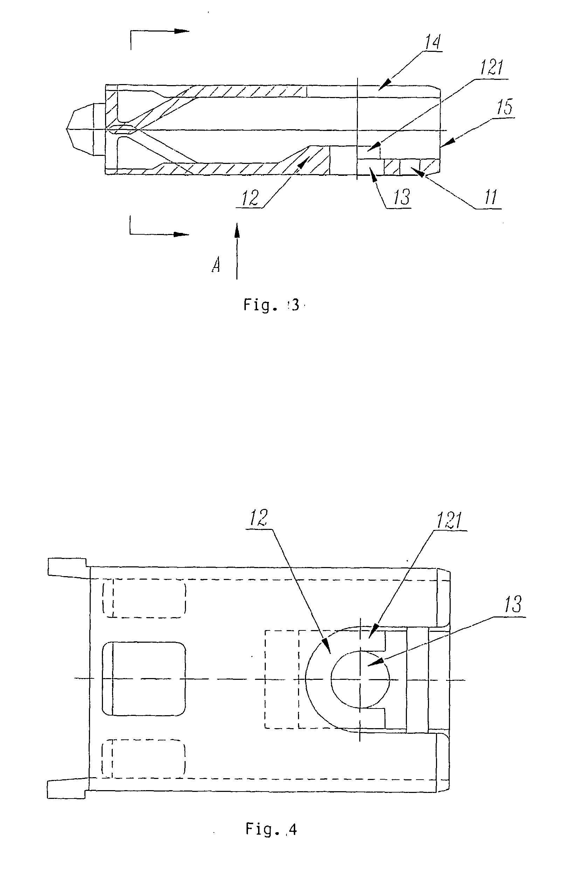

Fig. 3 shows the main view of the construction (complete section) for the closed shell of the present invention.
Fig. 4 shows the top view of the construction for the closed shell of the present invention.

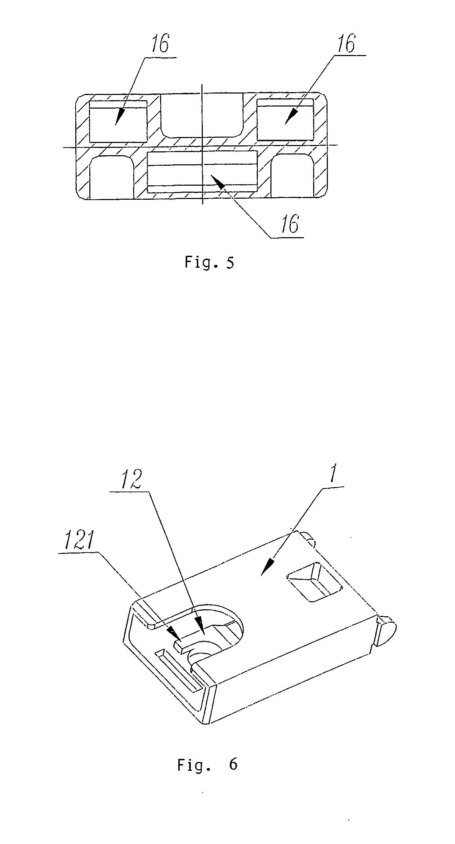

Fig. 5 shows the left view of the construction (complete section) for the closed shell of the present invention.
Fig. 6 shows the stereogram of the construction for the closed shell of the present invention.

### Detailed Description of the Embodiments

A connecting lock for exhibit framework assembly which connects the parts of the exhibit apparatus, comprising: a lock shell 1, a locking plate provided in the lock shell, at least two alculas provided at a head of the locking plate 2 and an eccentric wheel 3, the eccentric wheel 3 comprises a wheel axle 31, an eccentric disc mounted on the wheel axle32, and a wheel cap 33, the eccentric disc 32 is provided with the wheel cap 33, mating hole of the eccentric disc 23 matching the eccentric disc 32 are made at the rear of the locking plate 2, wherein that the lock shell 1 is a closed shell with cavity where a alcula window 16 is provided at the front end, the aculas 21 protrude out of the closed shell via the alcula window 16 from inside the closed shell, a wheel axle hole 13 running-fit the wheel axle 31 is mounted at the rear of the closed shell, a groove for mounting the eccentric wheel 14 is mounted on the wall of the closed shell opposite to the wheel axle hole 13, and an open window for mounting and disassembly the built-in assembly 15 is provided at the rear of the closed shell for disassembly and installing the locking plate 2 and the eccentric wheel 3, and a boss 12 is provided in the internal wall area of the closed shell between the front of the closed shell and the center line of the wheel axle hole 13 perpendicular to the moving direction of the locking plate 2, and extends to form a reinforcing block 121. In the embodiment, the reinforcing block 121 extends in the tangent direction of the wheel axle hole 13, the rear of the locking plate 2 shows downward bend shape, the rear end of the locking plate 2 is a bevel, and a long hole 11 for the access by the rear of the locking plate 2 is provided on the wall of the closed shell below the rear of the locking plate 2 when the lock is unlocked. Used to accommodate the rear of the locking plate 2 as needed in the service of the connecting lock, the long hole 11 can be either a throughhole or blind hole. The locking plate platen 34 is arranged between the eccentric disc 32 and the wheel cap 33, a reed 23 is provided on the locking plate 2, and at the combined action by the reed and the locking plate platen, the eccentric disc of the eccentric wheel better matches the locking plate.

## Claims

1. A connecting lock for exhibit framework assembly which connects the parts of the exhibit apparatus, comprising:
a lock shell (1),
a locking plate provided in the lock shell,
at least two alculas provided at a head of the locking plate(2) and
an eccentric wheel (3), the eccentric wheel comprises (3)
a wheel axle (31),
an eccentric disc mounted on the wheel axle,(32) and
a wheel cap (33), the eccentric disc (32) is provided with the wheel cap (33),
mating hole of the eccentric disc (23) matching the eccentric disc (32) are made at the rear of the locking plate (2), wherein that the lock shell (1) is a closed shell with cavity where a alcula window (16) is provided at the front end, the aculas (21) protrude out of the closed shell via the alcula window (16) from inside the closed shell, a wheel axle hole (13) running-fit the wheel axle (31) is mounted at the rear of the closed shell, a groove for mounting the eccentric wheel (14) is mounted on the wall of the closed shell opposite to the wheel axle hole (13), and an open window for mounting and disassembly the built-in assembly (15) is provided at the rear of the closed shell for disassembly and installing the locking plate (2) and the eccentric wheel (3).

2. The connecting lock for exhibit framework assembly as claimed in claim 1, wherein a boss (12) is provided in an internal wall area of the closed shell between the front of the closed shell and the center line of the wheel axle hole (13) perpendicular to the moving direction of the locking plate (2), and extends to form a reinforcing block (121).

3. The connecting lock for exhibit framework assembly as claimed in claim 2, wherein the reinforcing block (121) extends in the tangent direction of the wheel axle hole (13).

4. The connecting lock for exhibit framework assembly as claimed in claim 1, wherein that the rear of the locking plate (2) includes downward bend shape.

5. The connecting lock for exhibit framework assembly as claimed in claim 4, wherein the rear end of the locking plate (2) is a bevel.

6. The connecting lock for exhibit framework assembly as claimed in claim 4 or claim 5, further comprising a long hole (11) for the access by the rear of the locking plate (2) is provided on the wall of the closed shell below the rear of the locking plate (2) when the lock is unlocked.

7. The connecting lock for exhibit framework assembly as claimed in claim 1, further comprising a locking plate platen (34) is arranged between the eccentric disc (32) and the wheel cap (33).

8. The connecting lock for exhibit framework assembly as claimed in claim 1, further comprising a reed (23) is provided on the locking plate (2).
